# EUROPÄISCHE PATENTSCHRIFT

(11) **EP 2 407 283 B1**
(45) Veröffentlichungstag und Bekanntmachung des Hinweises auf die Patenterteilung: **22.03.2017**
(21) Anmeldenummer: 11172966.1
(22) Anmeldetag: 07.07.2011
(51) Int. Cl.: B25J 9/16

(54) **Roboterarm, Industrieroboter und Verfahren zum Erstellen eines mathematischen Robotermodells**
Robotic arm, industrial robot and method for producing a mathematical robotic model
Bras robotisé, robots industriels et méthode d'élaboration d'un modèle de robot mathématique

(30) Priorität: 12.07.2010 DE 102010031251
(43) Veröffentlichungstag der Anmeldung: 18.01.2012
(73) Patentinhaber: KUKA Roboter GmbH, 86165 Augsburg (DE)
(72) Erfinder: Purrucker, Thomas, 80689 München (DE); Mittmann, Ralf, 86415 Mering (DE); Groll, Michael, 86167 Augsburg (DE); Hager, Markus, 86152 Augsburg (DE); Kaderk, Sebastian, 86199 Augsburg (DE)
(74) Vertreter: Patentanwälte Funk & Böss GbR

(56) Entgegenhaltungen:
- EP-A2- 0 605 050
- EP-A2- 1 602 456
- EP-A2- 2 199 036
- DE-A1-102004 026 814
- DE-A1-102004 056 861
- US-A1- 2002 173 877
- US-A1- 2005 065 651
- US-A1- 2010 030 377

## Beschreibung

Die Erfindung betrifft einen Roboterarm, einen Industrieroboter und ein Verfahren zum Erstellen eines mathematischen Robotermodells.

Industrieroboter sind Arbeitsmaschinen, die zur automatischen Handhabung und/ oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren Achsen und programmierbare Steuerungen (Steuervorrichtungen) auf, die während des Betriebs die Bewegungsabläufe des Industrieroboters steuern bzw. regeln.

Für eine zufrieden stellende Steuerung oder Regelung der Roboter weisen die Steuerungen physikalische Modelle des Roboterarms auf. Die allgemeinen räumlichen Bewegungen des Roboterarms werden mit einem kinematischen Modell des Roboterarms beschrieben, das im Wesentlichen die Geometrie des Roboterarms ohne auf den Roboterarm wirkende Kräfte oder Momente beschreibt. Durch die eventuell auch lastabhängigen Kräfte oder Momente hervorgerufene Verformungen des Roboterarms können jedoch dazu führen, dass sich eine Ist-Position des Roboterarms von seiner Soll-Position unterscheidet.

Für eine verbesserte dynamische Steuerung oder Regelung kann der Roboter auch ein Dynamik-Modell aufweisen, das unter Berücksichtigung von Masseeigenschaften einen Zusammenhang zwischen Koordinaten der Achsen des Roboterarms, deren Geschwindigkeiten und Beschleunigungen, sowie Kräften und Momenten beschreibt.

Um den eventuell auftretenden Unterschied zwischen einer Ist-Position des Roboterarms und seiner Soll-Position im kinematischen Modell zumindest zu reduzieren, können für die statischen Positionsfehler die Masseeigenschaften und Elastizitäten des Roboterarms berücksichtigt werden, wodurch die Absolutgenauigkeit des Roboters verbessert wird. Dies kann mittels eines so genannten absolutgenauen Modells des Roboterarms berücksichtigt werden, d.h. ein Modell mit Berücksichtigung von in der Regel exemplarspezifischen statischen Verformungen.
Für konventionelle Roboter werden wenigstens eines der genannten Modelle beim Hersteller ermittelt und z.B. auf der Steuerung gespeichert. Ein nachträgliches Ändern insbesondere am Einsatzort des Roboters ist nicht vorgesehen.
Die DE 10 2004 026 814 A1 offenbart einen Roboterarm eines Roboters zu vermessen, um die Messwerte in einem Speicher der Steuervorrichtung des Roboters zu speichern. Aufgrund der Messwerte erstellt die Steuervorrichtung ein absolutgenaues Steuerungsmodell des Roboters.

Das Dokument US 2010/030377 A1 betrifft einen schlangenartigen Roboterarm aufweisend bewegbare Segmente ausgeführt als Mikro-Elektronische-Mechanische Systeme (MEMS) mit eingebauten adressierbaren Kontrollern.

Die Dokumenten US 2002/173877 A1 und US 2005/065651 A1 betreffen mobile Roboter ausgestattet mit einem on-board Speicher und/oder Kontroller.

Die Aufgabe der Erfindung ist es, einen flexibleren Roboterarm bzw. einen flexibleren Industrieroboter bereit zu stellen.

ie Aufgabe der Erfindung wird gelöst durch einen Roboterarm, aufweisend mehrere nacheinander angeordnete und mittels Gelenke verbundene Glieder, einen elektronischen Datensatz, aufgrund dessen ein mathematisches Robotermodell des Roboterarms mittels eines Rechenprogramms erstellbar ist, und ein im oder am Roboterarm angeordneten elektronischen Datenträger, in dem der Datensatz gespeichert ist.

Die Aufgabe der Erfindung wird auch gelöst durch einen Industrieroboter, aufweisend den erfindungsgemäßen Roboterarm und eine die Bewegung des Roboterarms steuernde und/oder regelnde Steuervorrichtung.

Wie bereits in der Einleitung beschrieben, benötigt ein Industrieroboter für die Steuerung und/oder Regelung der Bewegung seines Roboterarms ein den Roboterarm beschreibendes mathematisches Robotermodell, welches bei konventionellen Industrierobotern in der Steuervorrichtung gespeichert ist und daher nicht geändert werden kann. Erfindungsgemäß umfasst der Roboterarm bzw. der Industrieroboter den elektronischen Datensatz, aufgrund dessen das Robotermodell berechnet werden kann. Der Datensatz umfasst demnach insbesondere Rohdaten oder Basisdaten, aufgrund derer das Robotermodell berechenbar ist. Da nun erfindungsgemäß der Datensatz z.B. auf dem Datenträger im oder am Roboterarm gespeichert ist, ist es z.B. möglich, aufgrund einer Aktualisierung der Rechenvorschrift, aufgrund derer das Robotermodell basierend auf dem Datensatz errechnet wird, das Robotermodell in relativ einfacher Weise für den Industrieroboter zu aktualisieren, allgemein zu ändern.

Bei dem Robotermodell handelt es sich z.B. um ein kinematisches Modell oder um ein Dynamik-Modell des Roboterarms. Vorzugsweise ist das Robotermodell ein absolutgenaues Modell des Roboterarms.

Gemäß einer bevorzugten Ausführungsform des erfindungsgemäßen Industrieroboters ist in dessen Steuervorrichtung ein Rechenprogramm gespeichert, das aufgrund des Datensatzes das Robotermodell berechnet. Somit ist es z.B. möglich, die Rechenvorschrift zum Berechnen des Robotermodells, also das Rechenprogramm, bei einer Änderung der Steuerung und/oder Regelung an diese Änderung anzupassen, um beispielsweise ein der Änderung besser geeignetes Robotermodell zu erhalten.

So kann es gemäß einer Ausführungsform des erfindungsgemäßen Industrieroboters vorgesehen sein, dass dessen Steuervorrichtung bei seinem Hochfahren das Robotermodell aufgrund des Datensatzes berechnet. Insbesondere kann es vorgesehen sein, dass die Steuervorrichtung bei jedem Hochfahren das Robotermodell berechnet.

Ein weiterer Aspekt der Erfindung betrifft ein Verfahren zum Erstellen eines mathematischen Robotermodells eines Roboterarms eines Industrieroboters, der den Roboterarm, der mehrere nacheinander angeordnete und mittels Gelenke verbundene Gliedern aufweist, und eine die Bewegung des Roboterarms steuernde und/oder regelnde Steuervorrichtung aufweist, aufweisend folgende Verfahrensschritte:
- Vermessen des Roboterarms, um den Roboterarm beschreibende Vermessungsdaten zu erhalten,
- Speichern eines die Vermessungsdaten umfassenden elektronischen Datensatzes in einen im oder am Roboterarm angeordneten Datenträger, und
- Erstellen des Robotermodells mittels der Steuervorrichtung und aufgrund des Datensatzes.

Um den elektronischen Datensatz zu erhalten, kann der Roboterarm z.B. vermessen werden, wie dies dem Fachmann im Prinzip bekannt ist. Aufgrund der Vermessung erhält man Vermessungsdaten, die der elektronische Datensatz umfasst. Der Roboterarm kann z.B. mittels eines Kamerasystems vermessen werden, um Fehler in der Positioniergenauigkeit des Roboterarms z.B. aufgrund von Fertigungstoleranzen zu bestimmen. Aufgrund dieser Fehler kann dann das Robotermodell mittels einer geeigneten Rechenvorschrift erstellt werden.

Der erfindungsgemäße Industrieroboter kann eingerichtet sein, dass nachdem gegebenenfalls die Steuervorrichtung das Robotermodell berechnet hat, das Robotermodell in der Steuervorrichtung und/oder im Datenträger gespeichert wird. Anschließend kann die Steuervorrichtung insbesondere die Bewegung des Roboterarms basierend auf dem Robotermodell steuern und/oder regeln.

Gemäß einer bevorzugten Variante des erfindungsgemäßen Industrieroboters sind in der Steuervorrichtung mehrere Rechenvorschriften zum Berechnen mehrerer Robotermodelle desselben Typs gespeichert und die Steuervorrichtung ist eingerichtet, dass eine der Rechenvorschriften auswählbar ist, um das Robotermodell zu erstellen. Somit kann das erfindungsgemäße Verfahren zusätzlich folgende Verfahrensschritte aufweisen:
- Anbieten von in der Steuervorrichtung gespeicherter mehrerer Rechenvorschriften zum Berechnen mehrerer Robotermodelle desselben Typs, und
- Berechnen des Robotermodells aufgrund der ausgewählten Rechenvorschrift.

Aufgrund dieser Variante ist es möglich, dass eine Person z.B. während der Inbetriebnahme des erfindungsgemäßen Industrieroboters beispielsweise basierend auf einer Anwendung des Industrieroboters diejenige Rechenvorschrift auswählt, aufgrund derer ein besseres Robotermodell für die aktuelle Anwendung entsteht.

Es kann z.B. vorgesehen sein, dass aufgrund des vermessenen Roboterarms, d.h. aufgrund des Datensatzes beispielsweise mittels Optimierungsverfahren die Fehler in den einzelnen Roboterarmkomponenten, wie z.B. Glieder oder Gelenke, identifiziert werden, um dies im Robotermodell zu speichern.

So kann es vorgesehen sein, dass wenigstens zwei solcher Rechenvorschriften für ein Robotermodell desselben Typs, z.B. wenigstens zwei Rechenvorschriften zum Erstellen eines absolutgenauen Robotermodells vom Roboterarm zur Verfügung stehen, von denen je nach Anwendung des erfindungsgemäßen Industrieroboters eines besser geeignet ist als das andere. Aufgrund der Variante, gemäß derer die beiden Rechenvorschriften z.B. bei der Inbetriebnahme des erfindungsgemäßen Industrieroboters oder auch zu einem späteren Zeitpunkt beispielsweise einer Bedienperson des Industrieroboters angeboten werden, kann diese die bessere Variante für die aktuelle Anwendung auswählen.

Je nach Ausführungsform wird demnach die Information z.B. aus Messwerten, mittels derer das Robotermodell oder gegebenenfalls die Robotermodelle bestimmt werden können, als Basisinformation nachhaltig auf dem erfindungsgemäßen Roboter gespeichert, insbesondere auf dem Datenträger des Roboterarms. Als Basisinformation gelten insbesondere die Daten, die beim Vermessen des Roboters erzeugt werden. Darin enthalten sind beispielsweise die zugehörig zu einer gewissen Achsstellung ein kartesischer Positionierfehler im Raum. Diese Daten sind roboterspezifisch und können vorzugsweise automatisiert bei der Vermessung auf dem Datenträger des Roboterarms gespeichert werden. Wird beispielsweise bei der Inbetriebnahme des erfindungsgemäßen Roboters die angeschlossene Steuerungsvorrichtung hochgefahren, kann man gegebenenfalls entscheiden, mit welchem Robotermodell man arbeiten möchte. Man könnte auch zu einem späteren Zeitpunkt die Robotermodelle wechseln, ohne insbesondere dabei die Genauigkeitsgrenze zu überschreiten. Ein Grund für die Verwendung von unterschiedlichen Robotermodellen kann sein, dass die Robotermodelle Vor- und Nachteile in gewissen Anwendungen haben. Durch die Möglichkeit, gegebenenfalls am erfindungsgemäßen Roboter zu entscheiden, mit welchem Robotermodell die Steuerungsvorrichtung rechnen soll, kann man jeweils für die Anwendung das Robotermodell verwenden, dass die bessere Genauigkeit liefert. Zusätzlich können jederzeit weitere Robotermodelle eingeführt und verwaltet werden. Somit ist die Kompatibilität zu alten und neuen Robotermodellen gewährleistet. Ein weiterer Vorteil für die Robotermodellunabhängigkeit ist, dass der Verwaltungsaufwand für die unterschiedlichen Robotermodelle entfällt.

Ein Ausführungsbeispiel der Erfindung ist exemplarisch in den beigefügten schematischen Figuren dargestellt. Es zeigen:
- Fig. 1: einen Industrieroboter mit einer Steuervorrichtung und einem Roboterarm und
- Fig. 2: ein Flussdiagramm, welches Schritte zum Erhalten eines mathematischen Robotermodells veranschaulicht.

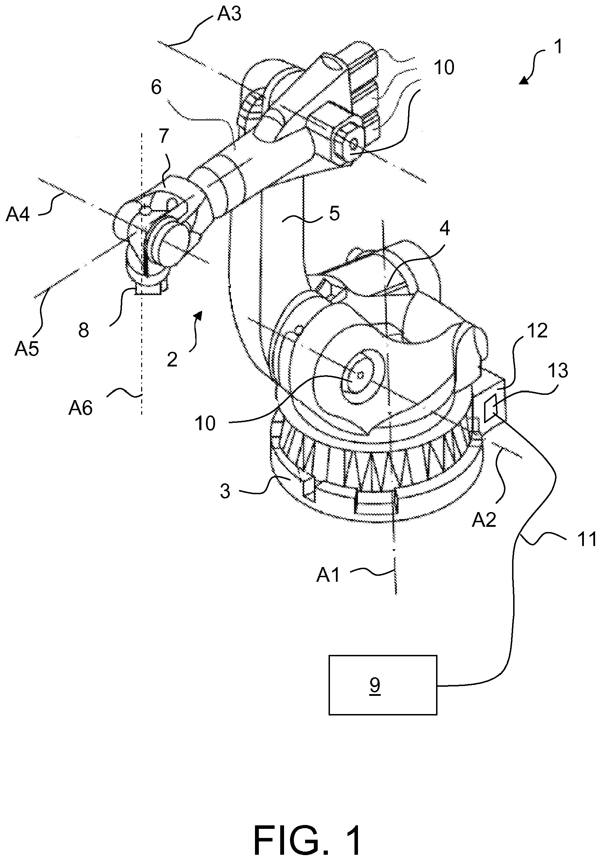

Die Fig. 1 zeigt in einer perspektivischen Darstellung einen Industrieroboter 1 mit einem Roboterarm 2 und mit einer Steuervorrichtung 9.

Der Roboterarm 2 umfasst im Falle des vorliegenden Ausführungsbeispiels mehrere nacheinander angeordnete und mittels Gelenke verbundene Glieder. Bei den Gliedern handelt es sich insbesondere um ein ortsfestes oder bewegliches Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7, an der ein Flansch 8 angeordnet ist. Am Flansch 8 kann z.B. ein nicht näher dargestellter Endeffektor befestigt werden.

Die Schwinge 5 ist am unteren Ende z.B. an einem nicht näher dargestellten Schwingenlagerkopf auf dem Karussell 4 um eine vorzugsweise horizontale Achse A2 schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Achsen A4, A5, A6.
Um den Industrieroboter 1 bzw. dessen Roboterarm 2 zu bewegen, umfasst dieser in allgemein bekannter Weise mit der Steuervorrichtung 9 verbundene Antriebe, die insbesondere elektrische Antriebe sind. In der Figur 1 sind nur einige der elektrischen Motoren 10 dieser Antriebe gezeigt.
Im Falle des vorliegenden Ausführungsbeispiels ist die Steuervorrichtung 9 in einem nicht näher dargestellten Steuerschrank angeordnet. Auf der Steuervorrichtung 9, die beispielsweise als ein PC ausgeführt ist, läuft ein dem Fachmann im Prinzip bekanntes Rechenprogramm, das die elektrischen Antriebe derart ansteuert, dass der Roboterarm 2 eine vorgegebene Bewegung ausführt.
Die Steuervorrichtung 9 ist z.B. über eine elektrische Verbindung 11 z.B. in Form einer elektrischen Leitung mit dem Roboterarm 2, insbesondere mit einem Anschlusskasten 12, der z.B. im oder am Gestell 3 des Roboterarms 2 angeordnet ist, verbunden. Der Steuerschrank bzw. die Steuervorrichtung 9 kann mehrere Meter vom Roboterarm 2 aufgestellt sein.
Im Falle des vorliegenden Ausführungsbeispiels ist im Anschlusskasten 12 ein mit der Steuervorrichtung 9 über die elektrische Verbindung 11 verbundener Datenspeicher oder Datenträger 13 angeordnet, auf dem ein dem Roboterarm 2 des Industrieroboters 1 zugeordneter Datensatz gespeichert ist.

Im Falle des vorliegenden Ausführungsbeispiels weist der im Datenträger 13 gespeicherte Datensatz dem individuellen Roboterarm 2 zugeordnete Basisdaten auf, aufgrund derer es mittels eines geeigneten, dem Fachmann im Prinzip bekannten Rechenprogramms möglich ist, ein mathematisches Robotermodell vom Roboterarm 2 zu erstellen. Bei dem Robotermodell kann es sich z.B. um ein kinematisches Modell oder um ein Dynamik-Modell des Roboterarms 2 handeln. Vorzugsweise handelt es sich bei dem Robotermodell um ein absolutgenaues Modell des Roboterarms 2.
Im Falle des vorliegenden Ausführungsbeispiels ist auf der Steuervorrichtung 9 nicht nur ein Rechenprogramm zum Steuern bzw. Regeln der Bewegung des Roboterarms 2 gespeichert, sondern auch das Rechenprogramm, welches aus dem im Datenträger 13 gespeicherten Datensatz das Robotermodell berechnet. Aufgrund des berechneten Rechenmodells wird es der Steuervorrichtung 9 ermöglicht, die Bewegung des Roboterarms 2 zu steuern bzw. zu regeln. Somit ist es möglich, das Robotermodell am Aufstellort des Industrieroboters 1 insbesondere individuell gemäß der individuellen Anwendung und mittels der Steuervorrichtung 9 des Industrieroboters 1 zu erstellen. Auch ist es möglich, gegebenenfalls das Robotermodell zu aktualisieren, sollte das aufgrund des Datensatzes zum Erstellen des Robotermodells vorgesehene Rechenprogramm verbessert bzw. verändert werden.
Insbesondere kann es vorgesehen sein, mittels des Datensatzes am Aufstellort des Industrieroboters 1 das Robotermodell z.B. bei der Inbetriebnahme des Industrieroboters 1 zu erstellen. Dann kann es vorgesehen sein, das erstellte Robotermodell z.B. auf der Steuervorrichtung 9 und/oder auf dem Datenträger 13 zu speichern. Es ist aber auch möglich, dass die Steuervorrichtung 9 eingerichtet ist, mittels ihres Rechenprogramms und aufgrund des Datensatzes vor jedem Hochfahren der Steuervorrichtung 9 das Rechenmodell neu zu erstellen.

Im Falle des vorliegenden Ausführungsbeispiels kann es vorgesehen sein, dass z.B. bei der Inbetriebnahme des Industrieroboters 1 und/oder auch zu einem späteren Zeitpunkt eine Bedienperson z.B. aufgrund der aktuellen Applikation des Industrieroboters 1 eine Auswahl von wenigstens zwei Rechenvorschriften bzw. Algorithmen erhält, die aufgrund unterschiedlicher Berechnungen unterschiedliche Robotermodelle desselben Typs berechnen. So kann es beispielsweise vorgesehen sein, dass in der Steuervorrichtung 9 z.B. wenigstens zwei verschiedene Rechenvorschriften zum Erstellen eines absolutgenauen Robotermodells des Roboterarms 2 gespeichert sind. Je nach Anwendung kann das eine oder das andere Robotermodell für die Steuerung bzw. Regelung des Industrieroboters 1 vorteilhafter sein. Aufgrund der Wahlmöglichkeit kann somit die Bedienperson am Aufstellort insbesondere bei der Inbetriebnahme und/oder auch zu einem Zeitpunkt ein für die aktuelle Anwendung günstiges Robotermodell mittels der Steuervorrichtung 9 erstellen lassen. Insbesondere kann es vorgesehen sein, zu einem späteren Zeitpunkt eine weitere Rechenvorschrift für ein weiteres Robotermodell oder ein alternatives Robotermodell zu hinterlegen, welches aufgrund des Datensatzes mittels der Steuervorrichtung 9 erstellt werden kann.

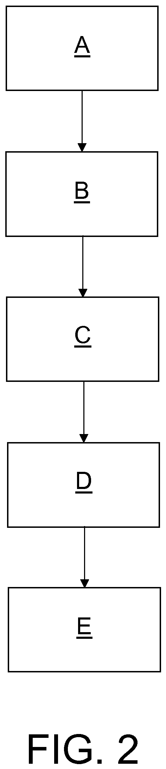

Die Fig. 2 veranschaulicht mittels eines Flussdiagramms mögliche Schritte zum Erhalten des mathematischen Robotermodells mittels eins Datensatzes, der zum Erstellen eines absolutgenauen Robotermodells verwendet werden kann.

Zunächst wird z.B. beim Roboterhersteller der Roboterarm 2 vermessen, Schritt A des in der Fig. 2 dargestellten Flussdiagramms. Anschließend wird der Roboterarm 2 bzw. die Vermessung verifiziert, Schritt B des Flussdiagramms. Die Vermessung des Roboterarms 2 als solches ist dem Fachmann im Prinzip bekannt und wird daher nicht näher erläutert. Aufgrund der Vermessung erhält man Vermessungsdaten, d.h. einen Datensatz, der für die Berechnung des Robotermodells notwendige Basisdaten umfasst. Dieser Datensatz wird im Datenträger 13 insbesondere beim Roboterhersteller gespeichert, Schritt C des Flussdiagramms. Am Aufstellort des Industrieroboters 1, d.h. beim Kunden, kann dann z.B. entschieden werden, aufgrund welcher Berechnungsvorschrift und aufgrund des Datensatzes das Robotermodell, insbesondere das absolutgenaue Robotermodell berechnet werden soll, Schritt D des Flussdiagramms. Somit kann vor Ort entschieden werden, welches Robotermodell für den Industrieroboter 1 verwendet werden soll.

Es kann auch vorgesehen sein, das Robotermodell zu wechseln, d.h. aufgrund des im Datenträger 13 gespeicherten Datensatzes ein neues Robotermodell zu erstellen, Schritt E des Flussdiagramms.

## Patentansprüche

1. Roboterarm, aufweisend mehrere nacheinander angeordnete und mittels Gelenke verbundene Glieder (3-7), **gekennzeichnet durch** einen im oder am Roboterarm (2) angeordneten elektronischen Datenträger (13), in dem ein elektronischer Datensatz gespeichert ist, aufgrund dessen ein mathematisches Robotermodell des Roboterarms (2) mittels eines Rechenprogramms erstellbar ist.

2. Industrieroboter, aufweisend einen Roboterarm (2) nach Anspruch 1 und eine die Bewegung des Roboterarms (2) steuernde und/oder regelnde Steuervorrichtung (9).

3. Industrieroboter nach Anspruch 2, bei dem das Robotermodell ein kinematisches Modell, ein Dynamik-Modell und/oder ein absolutgenaues Modell des Roboterarms (2) ist.

4. Industrieroboter nach Anspruch 2 oder 3, bei dem in der Steuervorrichtung (9) ein Rechenprogramm gespeichert ist, das aufgrund des Datensatzes das Robotermodell berechnet.

5. Industrieroboter nach Anspruch 4, bei dem die Steuervorrichtung (9) eingerichtet ist, nach dem Berechnen des Robotermodells dieses in der Steuervorrichtung (9) und/oder im Datenträger (13) zu speichern und insbesondere die Bewegung des Roboterarms (2) basierend auf dem Robotermodell zu steuern und/oder zu regeln.

6. Industrieroboter nach einem der Ansprüche 3 bis 5, bei dem in der Steuervorrichtungen (9) mehrere Rechenvorschriften zum Berechnen mehrerer Robotermodelle desselben Typs gespeichert sind und die Steuervorrichtung (9) eingerichtet ist, dass eine der Rechenvorschriften auswählbar ist, um das Robotermodell zu erstellen.

7. Industrieroboter nach einem der Ansprüche 3 bis 6, bei dem die Steuervorrichtung (9) eingerichtet ist, bei seinem Hochfahren das Robotermodell aufgrund des Datensatzes zu berechnen.

8. Verfahren zum Erstellen eines mathematischen Robotermodells eines Roboterarms (2) eines Industrieroboters (1), der den Roboterarm (2), der mehrere nacheinander angeordnete und mittels Gelenke verbundene Gliedern (3-7) aufweist, und eine die Bewegung des Roboterarms (2) steuernde und/oder regelnde Steuervorrichtung (9) aufweist, aufweisend folgende Verfahrensschritte:
- Vermessen des Roboterarms (2), um den Roboterarm (2) beschreibende Vermessungsdaten zu erhalten,
- Speichern eines die Vermessungsdaten umfassenden elektronischen Datensatzes in einen im oder am Roboterarm (2) angeordneten Datenträger (13), und
- Erstellen des Robotermodells mittels der Steuervorrichtung (9) und aufgrund des Datensatzes.

9. Verfahren nach Anspruch 8, bei dem das Robotermodell ein kinematisches Modell, ein Dynamik-Modell und/oder ein absolutgenaues Modell des Roboterarms (2) ist.

10. Verfahren nach Anspruch 8 oder 9, aufweisend Speichern des Robotermodells im Datenträger (13) und/oder in der Steuervorrichtung (9) nach dem Berechnen des Robotermodells.

11. Verfahren nach einem der Ansprüche 8 bis 10, aufweisend folgende zusätzliche Verfahrensschritte:
- Anbieten von in der Steuervorrichtungen (9) gespeicherter mehrerer Rechenvorschriften zum Berechnen mehrerer Robotermodelle desselben Typs, und
- Berechnen des Robotermodells aufgrund der ausgewählten Rechenvorschrift.

## Claims

1. Robot arm, comprising a plurality of links (3-7) which are arranged one after the other and connected by means of joints, **characterised by** an electronic data carrier (13) arranged in or on the robot arm (2), in which data carrier (13) an electronic data set is saved, on the basis of which a mathematical robot model of the robot arm (2) can be created by means of a calculation program.

2. Industrial robot, comprising a robot arm (2) according to claim 1 and a control device (9) controlling the movement of the robot arm (2).

3. Industrial robot according to claim 2, in which the robot model is a kinematic model, a dynamic-model and/or an absolutely accurate model of the robot arm (2).

4. Industrial robot according to claim 2 or 3, in which a calculation program is saved in the control device (9) which calculates the robot model on the basis of the dataset.

5. Industrial robot according to claim 4, in which the control device (9) is set up, after calculating the robot model, to save the latter in the control device (9) and/or in the data carrier (13) and in particular to control the movement of the robot arm (2) on the basis of the robot model.

6. Industrial robot according to any of claims 3 to 5, in which in the control devices (9) a plurality of calculation rules are saved for calculating a plurality of robot models of the same type and the control device (9) is set up so that one of the calculation rules can be selected in order to create the robot model.

7. Industrial robot according to any of claims 3 to 6, in which the control device (9) is set up, when it starts up, to calculate the robot model on the basis of the data set.

8. Method for creating a mathematical robot model of a robot arm (2) of an industrial robot (1), which comprises the robot arm (2), which has a plurality of links (3-7) arranged one after the other and connected by joints, and a control device (9) controlling the movement of the robot arm (2), comprising the following method steps:
- measuring the robot arm (2), to obtain measurement data describing the robot arm (2),
- saving an electronic data set comprising the measurement data in a data carrier (13) arranged in or on the robot arm (2), and
- creating the robot model by means of the control device (9) and on the basis of the data set.

9. Method according to claim 8, in which the robot model is a kinematic model, a dynamic-model and/or an absolutely accurate model of the robot arm (2).

10. Method according to claim 8 or 9, comprising saving the robot model in the data carrier (13) and/or in the control device (9) after calculating the robot model.

11. Method according to any of claims 8 to 10, comprising the following additional method steps:
- providing a plurality of calculation rules saved in the control devices (9) for calculating a plurality of robot models of the same type, and
- calculating the robot model on the basis of the selected calculation rule.

## Revendications

1. Bras de robot présentant plusieurs membres (3 - 7) agencés les uns derrière les autres et reliés au moyen d'articulations, **caractérisé par** un support de données (13) électronique agencé dans ou sur le bras de robot (2), dans lequel est mémorisé un jeu de données électronique sur la base duquel un modèle de robot mathématique du bras de robot (2) peut être élaboré au moyen d'un programme de calcul.

2. Robot industriel présentant un bras de robot (2) selon la revendication 1 et un dispositif de commande commandant et/ou réglant le mouvement du bras de robot (2).

3. Robot industriel selon la revendication 2, dans lequel le modèle de robot est un modèle cinématique, un modèle dynamique et/ou un modèle absolument exact du bras de robot (2).

4. Robot industriel selon la revendication 2 ou 3, dans lequel dans le dispositif de commande (9) est mémorisé un programme de calcul qui calcule le modèle de robot sur la base du jeu de données.

5. Robot industriel selon la revendication 4, dans lequel le dispositif de commande (9) est conçu pour mémoriser le modèle de robot, après le calcul de celui-ci, dans le dispositif de commande (9) et dans le support de données (13) et en particulier de commander et/ou de régler le mouvement du bras de robot (2) sur la base du modèle de robot.

6. Robot industriel selon l'une des revendications 3 à 5, dans lequel plusieurs règles de calcul pour calculer plusieurs modèles de robot du même type sont mémorisés dans le dispositif de commande (9) et le dispositif de commande (9) est conçu pour pouvoir choisir une des règles de calcul pour élaborer le modèle de robot.

7. Robot industriel selon l'une des revendications 3 à 6, dans lequel le dispositif de commande (9) est conçu pour calculer à son démarrage le modèle de robot sur la base du jeu de données.

8. Procédé d'élaboration d'un modèle robot mathématique d'un bras de robot (2) d'un robot industriel (1) qui présente le bras de robot (2) qui possède plusieurs membres (3-7) agencés les uns derrière les autres et reliés au moyen d'articulations et un dispositif de commande (9) qui commande et/ou règle le mouvement du bras de robot (2), présentant les étapes de procédé suivantes :
- mesurage du bras de robot (2) pour obtenir des données de mesurage décrivant le bras de robot (2),
- mémorisation d'un jeu de données électronique comprenant les données de mesurage dans un support de données (13) agencé dans ou sur le bras de robot (2), et
- élaboration du modèle de robot au moyen du dispositif de commande (9) et sur la base du jeu de données.

9. Procédé selon la revendication 8, dans lequel le modèle de robot est un modèle cinématique, un modèle dynamique et/ou un modèle absolument précis du bras de robot (2).

10. Procédé selon la revendication 8 ou 9, présentant la mémorisation du modèle de robot dans le support de données (13) et/ou dans le dispositif de commande (9) après le calcul du modèle de robot.

11. Procédé selon l'une quelconque des revendications 8 à 10, présentant les étapes de procédé additionnelles suivantes :
- proposition de plusieurs règles de calcul mémorisées dans le dispositif de commande (9) pour calculer plusieurs modèles de robot du même type, et
- calcul du modèle de robot sur la base de la règle de calcul choisie.
